# EUROPEAN PATENT APPLICATION

(11) **EP 4 375 119 A1**
(43) Date of publication of application: **29.05.2024**
(21) Application number: 23210445.5
(22) Date of filing: 16.11.2023
(51) Int. Cl.: B60L 15/20, B60L 50/53, B60L 3/12, B60L 58/12

(54) **SYSTEM AND METHOD FOR CONTROLLED CHARGING OF VEHICLE ENERGY STORAGE DEVICE**

(30) Priority: 22.11.2022 US 202263384760 P; 24.10.2023 US 202318492892
(71) Applicant: Transportation IP Holdings, LLC, Norwalk, CT 06851 (US)
(72) Inventor: Prasad, Rekha, Norwalk, 06851 (US); Wallace, Daniel, Norwalk, 06851 (US); Wolff, Jeffrey, Norwalk, 06851 (US); Kuttenkuler, Jason, Norwalk, 06851 (US); Young, Henry, Norwalk, 06851 (US)
(74) Representative: Ayre, Nicola Unity

(57) **Abstract**

A control system and method determine a target storage amount of electrical energy to store in an energy storage device onboard a vehicle during a charge operation in which the vehicle receives the electrical energy from an off-board power source. The control system and method determine the target storage amount based at least in part on a performance target for a planned trip of the vehicle. The control system and method control power electronics onboard the vehicle to distribute the electrical energy received during the charge operation between the energy storage device and one or more loads of the vehicle so that the energy storage device receives the target storage amount of electrical energy.

## Description

### CROSS-REFERENCE TO RELATED APPLICATIONS

This application is a non-provisional conversion of, and claims priority to, U.S. Provisional Patent Application No. 63/384,760, which was filed on November 22, 2022, and the entire disclosure of which is incorporated herein by reference.

### BACKGROUND

### Technical Field.

The subject matter described herein relates to managing charging operations of vehicles that receive and store electrical power from off-board power sources.

### Discussion of Art.

Some vehicles have at least one energy storage module that stores energy which can be selectively supplied to power propulsion of the vehicle. The energy storage module may include a battery pack, for example. Some such vehicles do not include a conventional internal combustion engine. The propulsion may be entirely provided by alternative power sources, such as the energy storage module, fuel cells, or a conductive connection to an off-board power source via a conductive pathway. For example, some vehicles include collector devices that are electrically couplable to conductive pathways that extend along routes traveled by the vehicles. The conductive pathway may be a catenary line, an electrified rail, or the like, and the collector device may be a pantograph, a conductive shoe, or the like. Through an electrical connection between the collector device and the conductive pathway, electrical power can be transferred between the vehicle and an off-board power source. For example, the vehicle may receive electrical power from the conductive pathway, and use the electrical power to propel movement of the vehicle along the route.

Electric vehicles are typically more energy efficient and require less maintenance than vehicles with fuel-burning internal combustion engines. A drawback with electric vehicles is a relatively short range compared to the combustion engine alternatives. Electric vehicles have to periodically recharge the energy storage devices. These charging events may delay planned trips (e.g., tasks or missions) of the vehicle, and may potentially interfere with the planned movement of other vehicles by obstructing a route, occupying a charger at a charging station, or the like.

Some planned trips of vehicles are cyclically repeated by the vehicles over time. For example, off-highway vehicles (OHVs) may be arranged in a fleet and may perform the same mission to move a payload, such as earth (e.g., dirt, rock, etc.), from a first location to a second location. The payload is applied to the OHVs at the first location and dumped or extracted from the OHVs at the second location. At least some of the OHVs may travel on the same route, such as in a line. If a first OHV has a depleted energy storage module, the first OHV may not be able to perform its mission until recharging the energy storage module. Furthermore, the first OHV may interfere with the missions of other OHVs in the line by obstructing passage around the first OHV. It may be desirable to have a control system and method that differs from those that are currently available.

### BRIEF DESCRIPTION

In one embodiment, a control system is provided that includes a controller having one or more processors that are configured to determine a target storage amount of electrical energy to store in an energy storage device onboard a vehicle during a charge operation in which the vehicle receives the electrical energy from an off-board power source. The controller may determine the target storage amount based at least in part on a performance target for a planned trip of the vehicle. The controller may control power electronics onboard the vehicle to distribute the electrical energy received during the charge operation between the energy storage device and one or more loads of the vehicle so that the energy storage device receives the target storage amount of electrical energy.

In one embodiment, a method is provided that includes determining a target storage amount of electrical energy to store in an energy storage device onboard a vehicle during a charge operation in which the vehicle receives the electrical energy from an off-board power source. The target storage amount may be determined based on a performance target for a planned trip of the vehicle. The method may include distributing the electrical energy received during the charge operation between the energy storage device and one or more loads of the vehicle so that the energy storage device receives the target storage amount of electrical energy.

### BRIEF DESCRIPTION OF THE DRAWINGS

The inventive subject matter may be understood from reading the following description of non-limiting examples, with reference to the attached drawings, wherein below:
Figure 1 illustrates two vehicles that travel on a route and charge under the control of a control system according to an embodiment;
Figure 2 is a block diagram of a control system integrated with a vehicle according to an embodiment;
Figure 3 is a graph representing state of charge (SOC) profiles of the energy storage device onboard a vehicle according to an embodiment, where the SOC profiles are associated with multiple trips of the vehicle; and
Figure 4 is a flow chart of a method of controlling the charging of a vehicle energy storage device according to an embodiment.

### DETAILED DESCRIPTION

Examples of the subject matter described herein provide a control system and method for controlled charging of rechargeable energy storage devices onboard vehicles. The energy storage devices may be charged by receiving electrical energy transferred from at least one power source that is off-board the vehicles (referred to as an off-board power source). The controlled charging may refer to storing a determined amount of electrical energy in a corresponding energy storage device during a charge operation to enable the energy storage device to have sufficient electrical energy to power propulsion of the vehicle for an entire planned trip or designated segment of a planned trip. In an example, the vehicle may charge initially for a first time period, referred to as a charge operation, and after the charge operation may move along a route to perform a planned trip. For example, the planned trip may be cyclical, and the energy storage device receives an amount of electrical energy from the off-board power source to propel the vehicle for an entire cycle and return to the off-board power source. In another example, first and second off-board power sources may be spaced apart along a route. The controlled charging may direct a sufficient amount of electrical energy to the energy storage device from the first off-board power source during the charge operation to enable the vehicle to travel the distance along the route to the second off-board power source.

The vehicle may be stationary during the charge operation or may move during the charge operation. For stationary charging, the vehicle may stop at a designated location to electrically connect to a conductive structure of the off-board power source, such as a pantograph, a charger connector, or the like. The power transfer may occur while the vehicle is stationary, and then the vehicle may move along the route after the charge operation is over. For motive charging in which the vehicle is in motion while the power transfer occurs, the vehicle may electrically connect to a conductive pathway of the off-board power source extending a length or distance along the route traversed by the vehicle. The vehicle may receive electrical energy from the conductive pathway as the vehicle moves along the route and maintains the conductive connection with the conductive pathway. For stationary charging, once the vehicle is aligned with the charger (and electrically coupled thereto), in some embodiments the power generation may be performed on site and a signal is sent to a stationary power generator to begin and supply the charger with electricity. For example, a diesel generator may start up and energize the charger.

According to one or more examples, the control system may determine a target amount of electrical energy to store in the energy storage device onboard the vehicle during the charge operation in order for the vehicle to achieve a performance target for a planned trip of the vehicle. The performance target may represent a value of a state of charge (SOC) (e.g., percent of charge capacity) of the energy storage device or an amount of electrical energy stored in the energy storage device at an end of the planned trip (or segment thereof). For example, the performance target may be for the planned trip to be SOC neutral for the vehicle that performs the planned trip. SOC neutral may occur when a final SOC value of the energy storage device at the end of the planned trip is approximately the same (e.g., within 2%, 5%, or the like) as an initial SOC value just prior to the charge operation that occurs before or during an initial portion of the planned trip.

The control system may determine or obtain the target storage amount by receiving a value for the target storage amount from another device, by accessing the designated value of the target storage amount stored in a memory device and/or database, by calculating the value for the target storage amount, and/or by adjusting the value of a prior target storage amount to account for an overshoot or undershoot. For example, the control system may receive a value for the target storage amount from a control device at a dispatch facility. In another example, the control system may calculate the target storage amount by considering various factors. Suitable factors may include the performance target, conditions and/or requirements of the planned trip, characteristics of the charge operation, and/or characteristics of the vehicle itself. Other suitable factors may include an age or health status of the energy storage system (or components thereof) and/or ambient conditions adjacent to the vehicle. The ambient conditions may be current (i.e., sensed in real time or near real time), may be estimated, or may be for an upcoming section of the route through which the vehicle is anticipated to pass. In one embodiment, the target storage amount may be a maximum value, while in another embodiment the target storage may be a minimum value (selected with reference to the end use requirements).

By determining the target amount of electrical energy to store during the charge operation, the control system may provide an efficient charge operation. For example, the charge operation may last for a period of time that allows the determined target storage amount of electrical energy to be directed to the energy storage device, optionally with an additional amount of electrical energy for margin. Once the designated amount of electrical energy is stored (e.g., a designated SOC is achieved), the charge operation ends and the vehicle begins or continues movement along the route to perform the planned trip using the stored electrical energy for propulsion. The process is efficient because the vehicle may perform the planned trip upon achieving the target storage amount during the charge operation, without unnecessary delay. The efficient charging of the vehicle according to the examples described herein, when applied to a fleet of vehicles, can improve fleet-wise throughput by reducing vehicle backups.

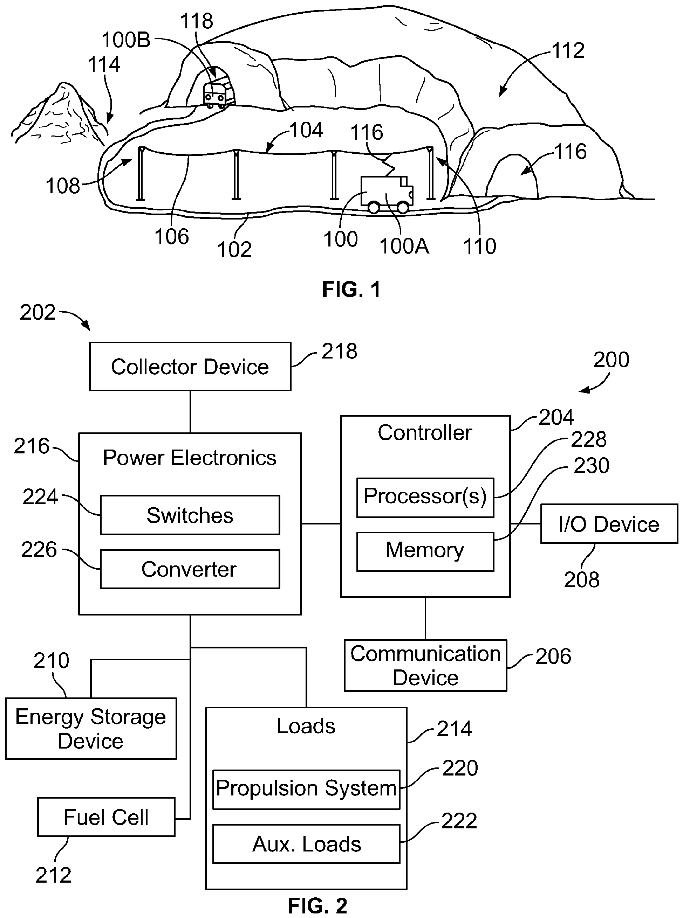

Figure 1 illustrates two vehicles 100 that travel on a route 102 and charge under the control of a control system according to an example. The vehicles include a first vehicle 100A and a second vehicle 100B. In one example, the vehicles are mining trucks, such as off-highway vehicles (OHVs). As such, the control system may be implemented to control the charging of OHVs. The OHVs in Figure 1 may be part of a fleet of vehicles that perform the same or similar planned trips. The OHVs may perform haul cycles as the planned trips. A haul cycle may be a repeated cyclical trip that involves transporting a payload. The payload may be a natural resource, such as soil, rock, coal, oil, and/or the like. For example, at the beginning of each haul cycle, the OHV may charge at an off-board power source 104 to store an amount of electrical energy in an energy storage device that is onboard the OHV. After the charge operation, the OHV may travel from the off-board power source along the route to perform a task, such as to receive a payload at a first (e.g., pickup) location 112 and transport the payload to a second (e.g., drop off) location 114 at which the payload is removed from the OHV. The movement and other operations of the OHV after disconnecting from the off-board power source may be powered entirely or substantially by the electrical energy stored in the energy storage device. After depositing the payload at the second location, the OHV may complete the haul cycle by returning to the first end of the conductive pathway of the off-board power source. In Figure 1, the pickup location may be within a mine 116, and the drop off location may be between an exit 118 of the mine and the first end of the conductive pathway.

The off-board power source optionally may include a conductive pathway 106 or trolley that extends along a length of the route from a first end 108 of the conductive pathway to a second end 110 of the conductive pathway opposite the first end. The OHV electrically connects to the conductive pathway to enable electrical power transfer from the off-board power source to the OHV. For example, the OHV may electrically connect to the conductive pathway via a collector device 116 mounted on the OHV. The collector device may be a pantograph, a conductive shoe, a conductive rail, or the like selected with reference to the end use requirements. In Figure 1, the collector device is a pantograph installed on a roof of the OHV. Suitable pantographs may be standard, or may be in a reverse pantograph orientation.

During each charge operation, the OHV may receive electrical energy from the off-board power source while the OHV travels on the route and the collector device maintains electrical connection to the conductive pathway. For example, the OHV may begin to receive the electrical energy while at or near the first end of the conductive pathway, and may cease receiving the electrical energy while at or near the second end. The charge operation may end or terminate when the OHV ceases receiving electrical energy from the off-board power source and/or electrically disconnects from the off-board power source. For example, the controller may monitor the current SOC of the energy storage device (e.g., the current amount of electrical energy stored in the energy storage device) during the charge operation. Once the current SOC reaches a target SOC (e.g., the amount of electrical energy stored in the energy storage device reaches the target storage amount), the controller may terminate the charge operation. In an example, the controller may generate a message that is communicated to the off-board power source. The message may notify the off-board power source that the charge operation is complete.

In Figure 1, the OHV may enter the mine shortly after passing the second end of the conductive pathway. The electrical energy stored in the onboard energy storage device may be used to power propulsion of the OHV along the route until the OHV completes the haul cycle and reaches the first end of the conductive pathway. For example, the energy storage device may supply electrical energy to one or more traction motors which are mechanically connected to axles and/or wheels of the OHV. When powered, the traction motor(s) may generate torque to rotate the wheels which propels the OHV along the route. In another example, the conductive pathway may be located along a route between the pickup location and the drop off location.

In embodiment, where the vehicle is a city bus, the off-board power source may not include the conductive pathway that extends along the route, and the bus may not charge while traveling on the route. Rather, the off-board power source may include a conductive structure that electrically connects to the collector device of the bus while the bus is stationary. The conductive structure of the off-board power source, referred to as a charger or a charging station, may include a pantograph, a charger connector, a third rail, a wireless power transfer unit (like an inducer), and the like. In this example, the charge operation may involve the bus moving towards the conductive structure and stopping at a location that allows the collector device to align with and electrically connect to the conductive structure. The bus receives electrical energy from the off-board power source via the conductive structure and the collector device while stationary. After receiving a determined storage amount of electrical energy, the charge operation ends and the bus may reestablish movement on the route to perform the remainder of the planned trip. A camera system may be used to align the conductive elements of the bus and the charger in one embodiment.

Suitable vehicles may include mining vehicles, rail vehicles, buses, trucks (with or without trailers), automobiles, agricultural vehicles, marine vessels, aircraft, or other off-highway vehicles. The vehicle systems described herein may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy, consist, swarm, fleet, platoon and the like).

The haul or duty cycle described with reference to Figure 1 is one example type of planned trip that can be performed by a vehicle that is controlled according to the control system described herein. Other planned trips may include transporting passengers from a first location to a second location, transporting finished products from a first location to a second location, and the like.

Figure 2 is a block diagram of a control system 200 integrated with a vehicle according to an example. The control system includes a controller 204. The controller performs some or all of the operations described herein to control vehicle charging. The control system may also include a communication device 206 and/or an input/output (I/O) device 208. The block diagram shows several vehicle components 202 that are disposed onboard the vehicle. The vehicle optionally may be one of the OHVs shown in Figure 1. Alternatively, the vehicle components in Figure 2 may be disposed on a different type of vehicle, such as a rail vehicle, on-road truck, or the like. In an example, the control system is disposed onboard the vehicle. Alternatively, the control system may be off-board the vehicle, such as at a data center, dispatch facility, off-board control system, or the like. Optionally, components of the control system may be distributed such that a first subset of the components are onboard the vehicle and a second subset of the components are off-board.

The controller may be operably connected to the vehicle components shown in Figure 2 and the other components of the control system via wired and/or wireless communication links to permit the transmission of information in the form of signals. The controller may generate control signals that are transmitted to the other components to control operation of the components. For example, the controller may generate control signals to control the communication device transmit one or more messages, and to control the I/O device to display one or more messages to an operator (e.g., human operator) of the vehicle.

The vehicle components that are illustrated in Figure 2 include an energy storage device 210, a fuel cell 212, various loads 214, power electronics 216, and a collector device 218. During the charge operation, the collector device of the vehicle receives electrical power from the off-board power source. Electrical power is also referred to herein as electrical energy. The collector device may be the collector device shown in Figure 1, such as a pantograph, conductive shoe, conductive rail, or the like. The vehicle uses the received electrical energy to power operations of the vehicle. One of the operations that may be powered by the received electrical energy is propulsion. For example, the power electronics include circuitry and circuit devices that may direct at least some of the received electrical energy to a propulsion system 220, which represents one of the loads. The propulsion system includes one or more traction motors, which are powered by the electrical energy to generate torque for propelling the vehicle along the route. The electrical energy may power additional loads onboard the vehicle, such as auxiliary loads 222. The auxiliary loads may include an auxiliary internal combustion engine, electrical systems, pneumatic systems, hydraulic systems, lighting systems, HVAC systems, and/or the like. The control system and/or the vehicle may have additional components that are not shown in Figure 2. In an alternative example, the control system and/or the vehicle may lack one or more of the components that are shown in Figure 2.

During the charge operation, at least some of the electrical energy received from the off-board power source is directed by the power electronics to the energy storage device to be stored for future use. The receipt of electrical energy increases the state of charge (SOC) of the energy storage device. The energy storage device may include one or more battery cells. The cells may be arranged to collectively form a battery pack. The energy storage device optionally may include additional or different energy storage devices other than battery cells, such as capacitors, flywheel devices, or the like.

The allocation of the received electrical energy to the energy storage device, fuel cell, and/or various loads may be controlled by the controller using the power electronics. For example, the power electronics may include electrical switch devices 224. The switch devices may be solid state, semiconductor switches (IGBTs, MOSFETs, etc.), electromechanical switches (e.g., relays, contactors, etc.), and/or the like. The controller may condition and/or regulate the electrical energy received from the off-board power source via the power electronics. For example, the power electronics may change one or more electrical parameters of the electrical energy received from the off-board power source to a level or range that is appropriate for storage in the energy storage device and/or power the loads. The electrical parameter that is changed may be voltage, phase, current, or the like.

For example, the power electronics may include a converter 226, transformer, or the like, that modifies a value of the electrical parameter of the electrical energy transferred from the off-board power source to the vehicle. The converter may be a DC-DC converter, an AC-AC converter, a DC-AC converter, an AC-DC converter, and/or the like. The converter may be electrically connected to the collector device and may modify the electrical energy received from the collector device prior to the electrical energy being allocated between the energy storage device and the load(s). In an example, the converter may be a DC-DC converter that steps down the voltage of direct current (DC) electrical energy received from the off-board power source. For example, the collector device of the vehicle may receive DC at a voltage of at least 1000 V from the off-board power source, and the DC-DC converter may step down the voltage to one or more levels suitable for the energy storage device and other vehicle components. In another example, the vehicle may include a transformer instead of a converter. The transformer may be used for modifying alternating current (AC) received at the vehicle from the off-board power source. A transformer may be used in a DC application as a pulsed DC system. For example, the collector device may receive pulsed high voltage DC from the off-board power source, and the transformer and/or converter may convert the high voltage DC to a lower voltage DC. By including power-converting equipment onboard the vehicle, the vehicle may be able to accommodate a wide range of electrical energy supplied by the off-board power source.

The vehicle optionally may have multiple converters for modifying the electrical energy to have appropriate parameters for different devices and/or loads that receive the electrical energy. For example, a first converter onboard the vehicle may be used for a high voltage subset of loads, and a second converter onboard the vehicle may be used for a low voltage subset of loads. The high voltage subset may include loads in the propulsion system, such as traction motors. The low voltage subset may include some auxiliary loads that operate at lower voltages than the loads and/or devices in the high voltage subset. The low voltage subset may include auxiliary blowers, the energy storage device, lighting systems, electronics systems, HVAC systems, compressors, and/or the like. The first converter may reduce the voltage of the electrical energy that is received by the collector device from the off-board power source to a first reduced level that is appropriate for the devices in the high voltage subset. The second converter may receive electrical energy at the first reduced level and reduce the voltage further to a second reduced level that is appropriate for the devices in the low voltage subset.

In an example, the collector device may receive AC electrical energy from the off-board power source. The AC energy may have a frequency of a typical utility power line, such as 50 Hz, 60 Hz, or the like. The converter onboard the vehicle may convert the AC to DC. The DC may be modified, such as to change the voltage level, prior to supplying the DC to the energy storage device and/or other loads of the vehicle. The DC may be passively or actively rectified.

The controller represents hardware circuitry that includes and/or is connected with a controller 228 having one or more processors (e.g., one or more microprocessors, integrated circuits, microcontrollers, field programmable gate arrays, etc.). The controller may represent one or more control units or devices that are operably connected to perform the operations described herein. In an example, the one or more processors may be disposed in a single, unitary control unit. In another example, the controller may include multiple different control units, and the processors may be distributed among the control units. The controller includes and/or is connected with a tangible and non-transitory computer-readable storage medium (e.g., data storage device), referred to herein as memory 230. The memory may store program instructions (e.g., software) that are executed by the one or more processors to perform the operations described herein. The program instructions may include one or more algorithms utilized by the one or more processors to generate one or more outputs. The program instructions may provide functions, models, and/or neural networks used to generate the outputs. The program instructions may further dictate actions to be performed by the one or more processors. One action may be to generate control signals for controlling the switch devices of the power electronics to allocate the received electrical energy from the off-board power source between at least the energy storage device and the loads. Another action may be to control the propulsion system of the vehicle during the charge operation (either directly or via a vehicle controller) to enable the vehicle to receive a determined amount of electrical energy that is sufficient to achieve a performance target for a planned trip of the vehicle. The memory optionally may store applications, such as various application program interfaces (APIs) that link to cloud hosting services, via the communication device, for accessing information from remote storage devices (e.g., servers).

A suitable communication device may include hardware circuitry that can communicate electrical signals via wireless communication pathways and/or wired conductive pathways. The communication device may include transceiving circuitry, one or more antennas, and the like, for wireless communication. The communication device may communicate directly with a client computer device (e.g., smartphone, tablet computer, laptop computer, etc.) of the operator of the vehicle or indirectly via a cellular tower, a modem, a router, and/or the like.

For example, the controller may control the communication device to send a message to the client computer device of the vehicle operator. The message may include tractive and/or brake settings to be applied during the charge operation to allow the vehicle to receive a determined amount of electrical energy that is sufficient to achieve a performance target for a planned trip of the vehicle. The message may include information about a current route (e.g., grade, length, energy required to traverse the route, etc.) and/or a subsequent route that the vehicle is scheduled to take. For example, mines may include multiple different hauls. A vehicle may be scheduled to perform multiple different hauls in succession, representing multiple different planned trips. The message may include information about the availability of charging stations along the route of the planned trip. In another example, the controller may generate a different message to be communicated by the communication device to an off-board control center. The message to the off-board control center may include information such as an amount of energy that the controller expects to need for powering the vehicle to complete the planned trip or a segment thereof.

The input/output (I/O) device allows an operator to receive information from the controller and optionally to interact with the control system by submitting user inputs. The I/O device may include one or more input devices designed to generate user command signals based on user manipulations (e.g., selections) provided on the input devices. For example, an input device may include or represent a touch sensitive screen or pad, a mouse, a keyboard, a joystick, a switch, a microphone, physical buttons, and/or the like. The I/O device may include a display device having a display screen that presents graphical indicia, such as text and symbols, for viewing by the user/operator. The controller may display a message on the screen of the display device to provide information to the operator. Optionally, the I/O device may include an audio speaker, one or more signal lights, and/or the like, for notifying and/or conveying information to the operator.

The control system described herein may be a computer-based model and/or algorithm that has one or more functions. The model may be integrated into a movement planning system (e.g., software). The movement planning system may be designed to plan and control operations of the vehicle. For example, the movement planning system may be Trip Optimizer^{™} of Wabtec Corp. The Trip Optimizer^{™} may generate a trip plan for the vehicle to travel along a route to a destination location. The trip plan may designate tractive and brake settings to be implemented by the vehicle at different times and locations during the planned trip of the vehicle with the intention of meeting or exceeding one or more objectives, such as to increase fuel efficiency, reduce noise, travel with a more consistent speed, and/or the like relative to traveling according to different control settings. The target storage amount determined according to the examples described herein, for efficient and optimized charging of the energy storage device, may be incorporated into the generation of the trip plan by the movement planning system.

In an example, the controller of the control system determines a target storage amount of electrical energy to store in the energy storage device of the vehicle during the charge operation. The target storage amount is determined based on an expected amount of electrical energy that will be supplied by the energy storage device to power operation of the vehicle on a planned trip, subsequent to the charge operation, until the vehicle completes and the planned trip and/or begins another charge operation to recharge the energy storage device. For example, the expected amount of electrical energy supplied by the energy storage device may be the amount used to power the OHVs shown in Figure 1 to travel along the route from the second end of the conductive pathway through the mine to the drop-off location and back to the first end of the conductive pathway. As used herein, reference to amounts of electrical energy may refer to values or levels of charge, such as state of charge (SOC), in the energy storage device. For example, an amount of electrical energy may be characterized by a percent SOC in the energy storage device that is achieved. As such, the target storage amount of electrical energy to store in the energy storage device, which is determined by the controller, may be a target SOC value to achieve by the end of the charge operation. Optionally, the amounts of electrical energy described herein may be characterized by a gross value characterized by units of energy, voltage, current, or the like. The units may be kilowatt hours (kwh), megawatt hours (mwh), kilojoules, kilovolts, ohms, or the like. The electrochemistry of the energy storage device (e.g., battery) deteriorates over time and also may be affected by temperature. The controller may gradually adjust the target storage amount based on aging of the energy storage device. For example, the controller may gradually increase the target storage amount as the energy storage device ages and/or the charge cycle count of the energy storage device increases. Optionally, the controller may adjust the target storage amount based on temperature, such as by using a temperature sensor to determine the ambient temperature and/or internal temperature of the energy storage device.

The target storage amount of electrical energy to store in the energy storage device is also based on one or more performance targets. A performance target represents a goal to achieve in performing the planned trip, while satisfying certain trip objectives and guidelines. The objectives may include avoiding delaying or otherwise interfering with the movement of other vehicles on the route, successfully completing the assigned tasks of the planned trip, and/or the like. The guidelines may include complying with appropriate regulations, such as speed limits, noise limits, power limits, and/or the like. The performance target may be related to SOC of the energy storage device.

In one example, the performance target may be to achieve a net SOC neutral operation. In the net SOC neutral operation, the final SOC value of the energy storage device at completion of the planned trip is approximately the same as an initial SOC value of the energy storage device at the beginning of the planned trip. For example, the final SOC value may be within a designated tolerance margin (e.g., within 1%, 2%, 5%, or the like) of the initial SOC value. The initial SOC value may refer to the SOC of the energy storage device just prior to the vehicle beginning to move and/or just prior to starting the charge operation. Achieving net SOC neutral operation may be efficient because essentially all of the electrical energy that is received by the vehicle from the off-board power source is utilized to perform the trip with a net neutral effect. As a result, the vehicle may be able to repeat a haul cycle multiple times without a net charge depletion or net charge increase in the energy storage device over the course of multiple haul cycles. A net charge depletion is undesirable as eventually the energy storage device may not have sufficient stored energy to successfully power a haul cycle. Possible effects are that the vehicle may be stranded on the route causing a back-up along the route, the vehicle may require intervention from another vehicle to pull the vehicle to a charging station or transfer electrical energy to the vehicle allowing the vehicle to propel itself to "limp" back to a charging station, and/or the like. The net charge increase may be undesirable as well from an efficiency standpoint because it indicates that the vehicle is spending too much time electrically connected to the off-board power source, unnecessarily delaying completion of the planned trip and/or slowing network throughput.

A related, but more generalized, performance target may be to complete the planned trip with the energy storage device having a final SOC value that is no less than the initial SOC value of the energy storage device at the beginning of the planned trip. In other examples, the performance target may be for the energy storage device to have a designated SOC value, to have a SOC value that is within a designated range, or to have a SOC value that is at least a designated threshold value, at completion of the planned trip. The designated threshold value may be a value between 40% and 75% of the charge capacity of the energy storage device. An example performance target may be for the vehicle to complete the planned trip with the energy storage device having a SOC that is about, or at least, 60% of the charge capacity (e.g., plus/minus 1%, 2%, or the like).

In an example, a planned trip for a vehicle may include multiple conductive pathways and/or charging stations spaced apart along the length of the route. For example, a vehicle may encounter and charge at a first conductive pathway during a first time period, may drive a distance after electrically disconnecting from the first conductive pathway during a second time period, and then may encounter and charge at a second conductive pathway during a third time period of the same planned trip. The conductive pathways may be dozens or hundreds of miles apart. The conductive pathways may be trolley segments or charging stations. In this example in which the vehicle uses electrical energy stored in the energy storage device to power propulsion between spaced-apart off-board power sources, the controller may determine a respective performance target and target storage amount for each of multiple different stages or segments of the planned trip. Furthermore, the controller may adjust the target storage amount for a second stage of the planned trip based on a difference between a performance target for the preceding, first stage of the planned trip and the actual SOC of the energy storage device at the end of the first stage. For example, if the SOC at the end of the first stage is 5% lower than the performance target, then the controller may increase the target storage amount for the second stage to cause the vehicle to receive more electrical energy from the off-board power source during the charge operation for the second stage to compensate for the undershoot during the first stage.

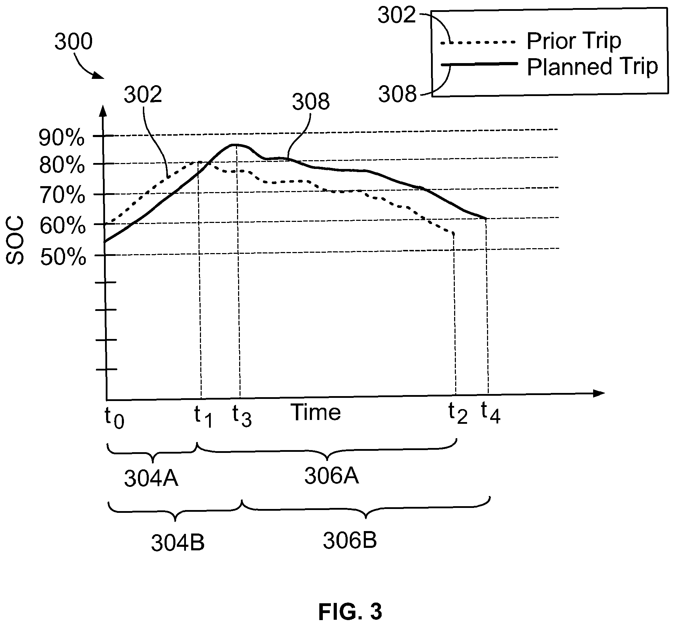

Figure 3 is a graph 300 representing SOC profiles of the energy storage device onboard a vehicle according to an example, where the SOC profiles are associated with multiple trips of the vehicle. The graph shows SOC values (in percent) of the energy storage device over time during the trips. Each SOC profile may be a line that represents the charge of the energy storage device over time during the trip. The charge increases during charge operations, decreases during discharge operations, and may remain approximately constant (e.g., except for nominal charge leakage) outside of the charge and discharge operations.

The line 302 represents a prior trip of a vehicle along a route. The vehicle optionally may be an OHV that performs haul cycles, as shown in Figure 1. During the prior trip, the vehicle receives electrical energy from the off-board power source during a charge operation 304A that occurs from time t₀ to time t₁. During the charge operation, the SOC of the energy storage device increases from 60% to 80%. The vehicle may be moving or stationary during the charge operation. From time t₁ to time t₂, the vehicle uses electrical energy stored in the energy storage device to power propulsion of the vehicle during the planned trip, so the SOC gradually decreases over time. The prior trip ends at time t₂, which occurs when the vehicle returns to a starting location or reaches a checkpoint location, such as a new off-board power source to recharge. The period from time t₁ to t₂ may represent a discharge period 306A, as stored energy is discharged to power propulsion. As shown in Figure 3, the final SOC value of the energy storage device at the end of the prior trip (e.g., at time t₂) is about 55%. The initial SOC value at the beginning of the prior trip was 60%, so the loss of 5% SOC during the course of the trip indicates that the prior trip was charge depleting. The final SOC value of 55% may not be a concern for the health of the energy storage device. However, multiple charge depleting trips performed in succession can cause the SOC to drop out of a range associated with normal operation and into a warning level.

The discharge period optionally may include temporary charge operations due to dynamic braking (e.g., regenerative braking) of the vehicle. In each temporary charge operation, mechanical energy from the movement of the vehicle (e.g., rotation of the wheels) is converted to electrical energy by one or more motor generator devices of the propulsion system. The controller may direct at least some of the electrical energy generated during dynamic braking to the energy storage device to increase the SOC of the energy storage device. The dynamic braking may compensate for some of the electrical energy discharged from the energy storage device during the discharge period, resulting in a net reduction in the amount of electrical energy discharged. In an example, the controller may account for dynamic braking temporary charge operations when determining the target storage amount. For example, when dynamic braking is planned to be used, the controller may reduce the target storage amount relative to a target storage amount for a planned trip that does not include dynamic braking. The controller may account for the dynamic braking by estimating an amount of electrical energy generated by the vehicle during dynamic braking temporary charge operations while on the planned trip. The controller may be provided with, or may analyze a route database and identify, one or more locations or sections of the route that are candidates for dynamic braking. Suitable candidate sections may have neutral or negative grades, may be approaching stop locations, and/or the like.

In an example, the controller may determine the target storage amount of electrical energy to store in the energy storage device during a planned trip based on the performance target and a predicted amount of energy to be discharged during the discharge period of the planned trip. The controller may determine the predicted amount of energy that will be discharged by the energy storage device based on historical data, computational modeling of vehicle performance, or the like. The historical data includes data and observations from prior trips of the same or different vehicles along the route. For example, the controller may receive energy usage information from other vehicles that traveled on the same route that the vehicle will travel on during the planned trip. In an example of computational modeling, the controller may calculate the predicted energy discharge based on the particular route using route data and/or historical data specific to the route. For example, the controller may obtain historical information characterizing the energy per distance (e.g., kwh/km) for various grades and payloads to estimate the required amount of energy needed.

In Figure 3, the line 308 represents a predicted SOC profile for an upcoming, planned trip of a vehicle. The planned trip may be a repeat of the prior trip. For example, the planned trip may have the same or similar objectives, constraints, route(s), payload type, and/or the like as the prior trip. The vehicle scheduled to perform the planned trip may be the same vehicle that performed the prior trip. Alternatively, the planned trip may be scheduled for performance by a different vehicle than the vehicle that performed the prior trip.

In an example, the controller may determine the target storage amount for the planned trip based at least in part on data from the prior trip. In general, the controller may determine the target storage amount based on a difference between (i) a prior amount of electrical energy received from the off-board power source and stored in the energy storage device during the prior charge operation associated with the prior trip of the vehicle along the route, and (ii) a prior amount of electrical energy discharged by the energy storage device to power propulsion of the vehicle along the route during the prior trip. Relevant data from the prior trip may include the initial SOC value of the energy storage device, the final SOC value, the SOC increase (e.g., amount of electrical energy stored in the energy storage device) during the charge operation 304A, and/or the SOC decrease (e.g., amount of electrical energy discharged from the energy storage device) during the discharge operation 306A.

In an example, the performance target for the planned trip may be for the energy storage device to have a designated SOC value (e.g., designated amount of electrical energy) at a designated point of the planned trip. The designated point of the planned trip may be the end of the planned trip, when the vehicle is at the end of the conductive pathway (e.g., immediately after the charge operation), when the vehicle is at the start of the conductive pathway (e.g., immediately before the charge operation), and/or the like. In an example, the performance target may be a designated SOC value, such as a 60% SOC at the end of the planned trip.

In Figure 3, the controller may analyze the prior trip to determine that the prior trip resulted in charge depletion of 5%. For example, the prior amount of electrical energy received during the charge operation increased the SOC 20%, and the prior amount of electrical energy discharged during the discharge operation reduced the SOC 25%, for a net depletion of 5%. In addition, the initial SOC value at the beginning of the planned trip may be 55%. The controller may determine that the SOC of the energy storage device may have to increase from 55% at the beginning of the planned trip to 60% at the end of the planned trip in order to meet the performance target. The performance target for the planned trip may therefore be characterized as a net charge positive SOC of 5% and/or the 60% SOC at completion.

The controller may control the vehicle to achieve this performance target by increasing the amount of electrical energy stored in the energy storage device during the charge operation(s) receiving electrical energy transferred by the off-board power source and/or decreasing the amount of electrical energy discharged from the energy storage device during the discharge operation(s), relative to the prior trip. A third option, which may be combined with at least one of the other two options, is for the controller to increase the amount of dynamic braking performed during the planned trip, relative to the prior trip, to increase the amount of electrical energy received by the energy storage device.

The controller can affect the amount of electrical energy from the off-board power source that gets stored in the energy storage device during the charge operation. Suitable ways for the controller to increase the amount of electrical energy may include (i) increasing the duration of the charge operation, (ii) allocating a greater percentage of the received electrical energy from the off-board power source to the energy storage device, (iii) increasing a power transfer rate or level from the off-board power source to the vehicle, and the like. Other suitable ways for the controller to affect the amount of electrical energy may include increasing or decreasing the voltage and/or the current. In applications where the electrical energy is alternating current, the controller may modify the frequency of the AC current. In some examples, the power transfer rate may be constant. In an example in which the vehicle is stationary during the charge operation, the controller may increase the duration of the charge operation by receiving electrical energy from the off-board power source for a longer period of time than the prior trip. Optionally, the controller may increase the percent of electrical energy allocated to the energy storage device by deactivating or reducing an operating level of one or more loads, such as idling traction motors, HVAC systems, and the like, during the charge operation. The loads may be powered by the electrical energy received from the off-board power system, so reducing the draw of the loads increases the amount of electrical energy that can be stored in the energy storage device. In one embodiment, the controller may monitor parameters of the vehicle and/or charging system during the charging operation and may dynamically control charging aspects responsive to the monitored values. These values may include the temperature of the transmission wires, and the controller may increase the voltage until a wire temperature reaches a determined temperature. This approach may allow, for example, faster charging at higher voltages during colder weather relative to the voltages available during hotter weather. Similarly, the controller may monitor the temperature in battery cells such that newer cells with lower internal resistance may be charged faster than older cells with relatively greater internal electrical resistance (and which may therefore heat faster during charging). Another parameter the controller may monitor for is arcing, which may be detectable electrically, magnetically, visually and acoustically. One or more of those detection approaches may be used as a limiting maximum for charging voltage by the controller. That is, the voltage may be increased to the point where an arc occurs, at which point the controller responds to the arc detection.

In an example in which the vehicle moves during the charge operation, the controller may select a movement characteristic of the vehicle to achieve the target storage amount. The movement characteristic may be a speed of the vehicle, a tractive setting (e.g., torque, speed or throttle setting), and/or the like. For example, the controller may select a speed at which the vehicle travels along the segment of the route that has the conductive pathway (shown in Figure 1) to enable sufficient energy transfer to the vehicle by the end of the segment that the energy storage device attains the target storage amount of electrical energy (e.g., a target SOC). The controller may select the movement characteristics based on the length of the conductive pathway, the rate at which the electrical energy is conducted from the conductive pathway to the vehicle, and the allocation of the received electrical energy onboard the vehicle to the energy storage device. Optionally, the controller may select a tractive setting of the propulsion system rather than selecting a speed. For example, the controller may select a tractive setting of notch 4, which results in the vehicle traveling at the speed described above. For example, the selected tractive setting may cause the vehicle to travel during the charge operation at a speed that enables the energy storage device to receive at least the target storage amount of electrical energy upon reaching the end of the conductive pathway.

In an example in which the vehicle is stationary during the charge operation, the controller may select an amount of time for the charge operation (e.g., time in which electrical energy is transferred from the off-board power source to the vehicle) based on the rate of energy transfer, the allocation percentage of the received electrical energy to the energy storage device, and the like, to enable the energy storage device to reach the target storage amount during the charge operation. The controller may select the movement characteristic(s) and/or the amount of time for the charge operation to ensure that the energy storage device reaches the target storage amount without undue delays caused by excessive charging. For example, the controller selects the movement characteristic(s) and/or the amount of time to avoid a situation in which significantly more electrical energy is transferred to the vehicle than necessary, which may reduce the trip efficiency and vehicle network throughput.

In an example, for a vehicle that performs cyclical trips and moves along a conductive pathway as shown in Figure 3, the controller may make trip-by-trip adjustments by modifying the speed at which the vehicle travels along the conductive pathway to selectively control the amount of electrical energy received by the vehicle during each charge operation. For stationary charging, the controller may make similar trip-by-trip adjustments by modifying the time at which the vehicle is charging from the off-board power source to selectively control the amount of electrical energy received by the vehicle during each charge operation. For example, because the prior trip in Figure 3 resulted in a 5% SOC depletion, the controller may select a reduced speed at which the vehicle will travel along the conductive pathway during the upcoming planned trip, relative to the speed at which the vehicle moved along the conductive pathway during the prior trip. Stated differently, the controller may select a reduced speed for the vehicle along the conductive pathway in an attempt to achieve a net 5% increase in the SOC during the planned trip. Traveling slower provides a dual benefit of increasing the amount of time for electrical energy transfer as well as reducing the load of the propulsion system, allowing a greater allocation of the received electrical energy to the energy storage device. In the stationary charging example, the controller may select (e.g., determine) the duration of the charge operation for the planned trip, based at least in part on the rate of power transfer to the vehicle and the allocation of electrical energy to the energy storage device, to achieve a target storage amount of electrical energy stored in the energy storage device during the charge operation. As such, the controller may control the vehicle speed during the charge operation and/or duration of the charge operation to regulate the target storage amount (e.g., target SOC). And, the controller may determine the target storage amount for the planned trip to ensure that the performance target at the end of the planned trip (e.g., cycle) is met and that the vehicle completes the planned trip in a timely manner for overall productivity. In one embodiment, the controller may monitor a charge depletion rate of the energy storage device, and may adjust the vehicle operation in response to a sensed depletion rate that differs from an expected depletion rate. Similarly, the controller may monitor battery temperatures (and thermal rates of change), electrical resistivity of the energy storage device, and the like. With this and/or similar data the controller may switch operational settings and/or trip plan parameters in a determined manner. In practice, a vehicle performing iterative trips may see the trip plan altered over time by the controller.

In Figure 3, the controller increases the duration of the charge operation for the planned trip relative to the prior trip. The charge operation 304B for the planned trip lasts from time t₀ to time t₃. The SOC of the energy storage device for the planned trip increases from 55% to 85% during the charge operation. The discharge operation 306B of the planned trip occurs from time t₃ to time t₄. The SOC at the beginning of the discharge operation is 85%, which is greater than the 80% at the start of the discharge operation during the prior trip. In this hypothetical example, the controller may control the charge operation to achieve the 85% SOC at the end of the charge operation and/or the 30% increase in SOC during the charge operation.

The SOC of the energy storage device gradually decreases during the discharge operation of the planned trip, similar to the prior trip. Optionally, the vehicle may perform the same work during the discharge operation of the planned trip as during the prior trip. For example, the vehicle may transport a payload of similar weight for a similar distance in both trips. Because the discharge operation starts later during the planned trip relative to the prior trip, the vehicle may complete the planned trip at time t4, which is later than the end of prior trip. The final SOC at the end of the planned trip is 60%, which satisfies the performance target.

The 85% SOC value, the 30% SOC increase, and/or the equivalent numerical value of electrical energy during the charge operation may represent the target storage amount of electrical energy to store in the energy storage device. The controller may analyze or compute a series of iterations of various trips having modified variables to determine the target storage amount of electrical energy to store in the energy storage device that is able to meet the performance target at the end of the planned trip without violating objectives or guidelines.

In Figure 3, the controller modifies the charge operation relative to the prior trip, without modifying the discharge operation, to determine a target storage amount that will achieve the performance target. In another example, the controller may modify the discharge operation relative to the prior trip, either instead of or in addition to modifying the charge operation. For example, the controller may conserve energy consumption to increase the final SOC value, relative to the prior trip, by reducing the amount of electrical energy that is discharged from the energy storage device to power propulsion of the vehicle during the portion of the trip after the charge operation. In an example, the controller may reduce the discharge amount of electrical energy by reducing weight, reducing speed, reducing acceleration, or the like, of the vehicle during the discharge operation relative to the prior trip. The controller optionally may implement dynamic braking as the vehicle moves along the route to supply electrical energy to the energy storage device and compensate for some of the discharged electrical energy.

For example, the controller may reduce the weight of the vehicle by selecting a reduced weight payload to be carried by the vehicle on the planned trip, relative to the weight of the payload carried by the vehicle on the prior trip. The reduced weight of the payload reduces the tractive load on the vehicle to perform the planned trip. In an example in which the vehicle performs a plurality of haul cycles, the controller may select different weights of payload for different haul cycles in order to vary the energy consumption to achieve the performance target. If a prior trip was charge depleting, as shown in Figure 3, then the controller may select a reduced weight payload for the subsequent, planned trip which may increase the final SOC value of the planned trip relative to the final SOC value of the prior trip. Conversely, if the energy storage device has excess charge from the prior trip, the controller may select a payload for the planned trip that weighs more than the payload carried during the prior trip. Referring to Figure 3, selecting a reduced weight payload may enable the vehicle to travel faster along the route than the vehicle travels during the prior trip, without discharging more electrical energy from the energy storage device. The net effect may be that the vehicle is able to complete the planned trip earlier than time t₄, which may avoid scheduling delays and/or interfering with the movement of other vehicles. In another example, if the vehicle is able to delay completing the planned trip beyond time t₄ without consequences, the controller may conserve energy consumption during the discharge operation to increase the final SOC value by further reducing the speed, acceleration, tractive effort, and/or the like of the vehicle.

In an example, after determining the target storage amount of electrical energy to store in the energy storage device during the charge operation of the planned trip, the controller may allocate at least some of the electrical energy received by the vehicle during the charge operation to the energy storage device so that the energy storage device receives the target storage amount of electrical energy during the charge operation. The allocation may be between the energy storage device and one or more of the vehicle loads. The controller may control the allocation by controlling the power electronics of the vehicle that receive the electrical energy from the collector device. In an example, the controller may control the allocation such that the energy storage device receives the target storage amount of electrical energy during the charge operation by deactivating non-essential loads of the vehicle and/or operating essential loads of the vehicle at limited operating levels until the target storage amount is achieved. If the controller determines the target storage amount based on a speed of the vehicle relative to the conductive pathway, the controller may allocate sufficient received electrical energy to the propulsion system to allow the vehicle to travel at that speed during the charge operation. The controller may allocate the electrical energy received by concurrently directing a first portion of the electrical energy to the energy storage device and a second portion of the electrical energy to one or more loads. The controller may direct the received electrical energy to the different destination devices by controlling the power electronics (e.g., switches, DC-DC converter, etc.).

During the charge operation, the controller may first allocate electrical energy to priority (e.g., essential, necessary, etc.) loads, such as the propulsion system if the vehicle is traveling, safety systems, electronic control systems, HVAC systems, lighting systems, and/or the like. After allocating electrical energy to the priority loads, the controller may allocate at least a portion of the remainder of the received electrical energy to the energy storage device until the target storage amount is reached. After achieving the target storage amount, the controller may change the allocation to direct all or at least most of the received electrical energy to the vehicle loads, without directing the electrical energy to the energy storage device, or may end the charge operation. The controller may end the charge operation by electrically disconnecting the collector device from the off-board power source or by controlling a switch device of the power electronics to electrically disconnect the collector device from the power electronics on the vehicle. In the example shown in Figure 3, the controller may allocate a sufficient percentage of the received electrical energy to the energy storage device to enable the SOC to reach the determined target storage amount of 85%.

Optionally, the controller may control the allocation by modifying how the DC-DC converter conditions or regulates the received electrical energy. For example, the controller may use the DC-DC converter to step down the voltage of the received electrical energy to a first level during a first period of the charge operation, and may reduce the magnitude of the voltage step down during a second period to enable a greater extent or rate of electrical energy storage during the second period relative to the first period. The energy storage device may be able to accept different upper voltage limits of electrical energy at different SOC levels without degrading the energy storage device, so the controller may use the DC-DC converter and other power electronics to vary the parameters of the electrical energy directed to the energy storage device over time.

Optionally, the controller of the control system may control the movement of the vehicle and/or the timing of the charge and discharge operations according to the determined movement characteristics by generating control signals that are communicated to the propulsion system or a vehicle controller. Optionally, the controller may generate a message that is displayed by the display device of the I/O device and/or communicated by the communication device to a user device of the operator. The message may include the determined movement characteristics in order to achieve the determined target storage value during the charge operation. The movement characteristics may include a speed or upper speed limit at which the vehicle travels during the charge operation, an amount of time for the vehicle to be stationary during the charge operation, a speed or upper speed limit at which the vehicle travels during the discharge operation, a weight or type of payload for the vehicle to carry, and/or the like in order for the vehicle to achieve the performance target for the planned trip.

In an example, the controller may monitor or track the SOC (e.g., capacity) of the energy storage device during the planned trip as the vehicle is traveling along the route. For example, during the discharge period, the controller may use a sensor, such as a current sensor, voltage sensor, and/or the like, to determine the current SOC of the energy storage device and compare the current SOC to an expected SOC. For example, the controller may determine a change in kw-hr and compare the change to the expected SOC. The controller may adjust the movement of the vehicle and/or the operations of other loads on the vehicle based on the difference between the current SOC and the expected SOC.

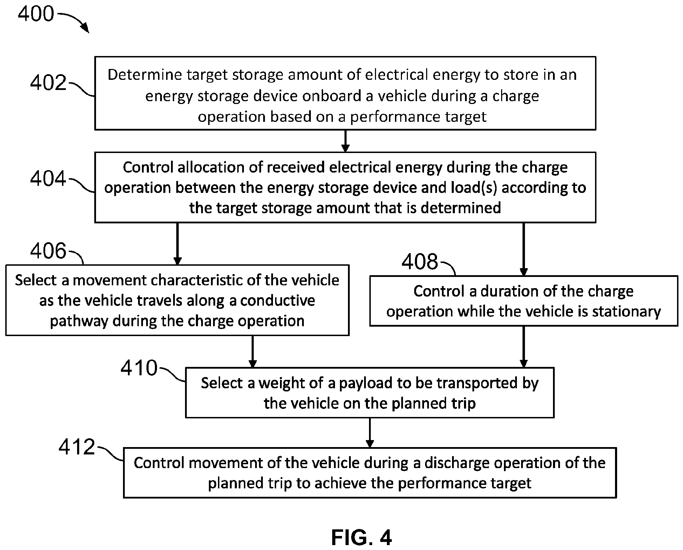

Figure 4 is a flow chart of a method 400 of controlling charging of a vehicle energy storage device according to an example. The method may be performed in whole or in part by the controller of the control system shown in Figure 2. The method optionally may include more steps than shown, fewer steps than shown, and/or different steps than shown in Figure 4. The order of the steps may be performed in an order that is practical, unless otherwise stated.

At step 402, a target storage amount of electrical energy to store in an energy storage device onboard a vehicle during a charge operation is determined. During the charge operation, the vehicle receives the electrical energy from an off-board power source. The target storage amount may be determined based on a performance target for a planned trip of the vehicle traveling along a route. Optionally, the performance target may be the energy storage device of the vehicle having a state of charge at completion of the planned trip that is at least a designated threshold value. Optionally, the performance target may be the energy storage device of the vehicle having a final state of charge value at completion of the planned trip that is no less than an initial state of charge value of the energy storage device at a beginning of the planned trip. The target storage amount may be determined based on a difference between (i) a cumulative prior amount of electrical energy received by the energy storage device from (a) the off-board power source during a prior charge operation associated with a prior trip of the vehicle and (b) dynamic braking operations during the prior trip, and (ii) a prior amount of electrical energy discharged by the energy storage device during the prior trip, such as to power propulsion of the vehicle along the route. Optionally, the planned trip is a haul cycle of an off-highway vehicle that represents the vehicle, and the performance target relates to a state of charge (SOC) of the energy storage device at an end of the haul cycle.

At step 404, an allocation of the electrical energy received by the vehicle during the charge operation between the energy storage device and one or more loads of the vehicle is controlled according to the target storage amount that is determined. The allocation may be controlled by controlling power electronics disposed onboard the vehicle. The method may include controlling the power electronics to receive the electrical energy from the off-board power source during the charge operation via a collector device disposed onboard the vehicle. The power electronics may be controlled to receive the electrical energy while the vehicle is stationary on the route and/or while the vehicle is moving on the route.

In an example in which the vehicle moves during the charge operation, controlling the allocation may include distributing the electrical energy to the energy storage device and to a propulsion system of the vehicle to propel movement of the vehicle along the route. The vehicle may include a collector device that electrically connects to a conductive pathway of the off-board power source extending along a segment of the route as the vehicle travels along the segment during the charge operation. The method may include, at step 406, selecting a movement characteristic of the vehicle as the vehicle travels along the segment of the route during the charge operation. The movement characteristic may be selected based on a rate at which the electrical energy is conducted from the conductive pathway to the vehicle in order to achieve the target storage amount during the charge operation. Selecting the movement characteristic may include selecting one or more of (i) a speed at which the vehicle travels along the segment of the route based on a length of the conductive pathway and the rate at which the electrical energy is conducted from the conductive pathway to the vehicle, or (ii) a tractive setting of a propulsion system of the vehicle to propel the vehicle at the speed, such that a sufficient amount of the electrical energy from the off-board power source is directed to the energy storage device during the charge operation to achieve the target storage amount. Optionally, selecting the movement characteristic may include reducing a speed at which the vehicle travels along the segment of the route during the charge operation, relative to prior movement of the vehicle along the segment during a prior charge operation, to increase the amount of electrical energy that is stored in the energy storage device during the charge operation relative to the prior charge operation.

In an alternative example in which the vehicle is stationary during the charge operation, rather than select a movement characteristic the method may include, at step 408, controlling a duration of the charge operation. The duration of the charge operation may be selected based on a rate at which the electrical energy is conducted from the conductive structure to the collector device, in order to achieve the target storage amount of electrical energy stored in the energy storage device.

The method may include, at step 410, selecting a weight of a payload to be carried and transported by the vehicle on the planned trip based on the target storage amount and/or the performance target. For example, the weight of the payload affects the work that is required to propel the vehicle during the planned trip. When propulsion is powered by discharge of electrical energy from an onboard energy storage device (e.g., battery pack), a heavier payload requires the energy storage device to discharge more electrical energy during the planned trip than a lighter payload. The controller may select the weight of the payload for the planned trip in consideration of the performance target and the target storage amount. For example, the controller may select a lighter payload to reduce the amount of electrical energy discharged by the energy storage device during a discharge operation of the planned trip, and thereby increase a final SOC value of the energy storage device at the end of the planned trip relative to the final SOC value at the end of a prior trip in which the vehicle transported a heavier payload. The lighter payload reduces the tractive load on the vehicle for the planned trip relative to the heavier load during the prior trip.

The method may include, at step 412, controlling movement of the vehicle during a discharge operation to achieve the performance target. During the discharge operation, the vehicle performs the planned trip using electrical energy discharged from the energy storage device. For example, propulsion of the vehicle may be entirely or at least mostly powered by electrical energy supplied by the energy storage device. In an example, the controller may control movement of the vehicle during the discharge operation to achieve a net SOC neutral operation. For example, the controller may attempt to limit the amount of electrical energy supplied by the energy storage device during the planned trip to be no greater than the amount of electrical energy received by the energy storage device during the planned trip. In other words, the controller may limit the outgoing electrical energy during the discharge operation of the planned trip to be no greater than the incoming electrical energy during the charge operation of the planned trip. The controller may control the movement of the vehicle to limit the amount of discharged electrical energy from the energy storage device by selecting one or more speed values for the vehicle, selecting one or more acceleration values for the vehicle, selecting the weight of the payload, and/or the like.

Optionally, the method may include reducing a value of an electrical parameter of the electrical energy conducted from the off-board power source to the vehicle during the charge operation via a DC-DC converter disposed onboard the vehicle.

In an example, a control system includes a controller having one or more processors that are configured to determine a target storage amount of electrical energy to store in an energy storage device onboard a vehicle during a charge operation in which the vehicle receives the electrical energy from an off-board power source. The controller may determine the target storage amount based at least in part on a performance target for a planned trip of the vehicle. The controller may control power electronics onboard the vehicle to distribute the electrical energy received during the charge operation between the energy storage device and one or more loads of the vehicle so that the energy storage device receives the target storage amount of electrical energy.

The vehicle may include a collector device configured to electrically connect to a conductive pathway of the off-board power source extending along a route. The power electronics may receive the electrical energy from the collector device during the charge operation as the vehicle travels along the route. The controller may select a movement characteristic of the vehicle as the vehicle travels along the route in electrical connection with the conductive pathway so that the energy storage device receives the target storage amount of electrical energy. The controller may select, as the movement characteristic, (i) a speed at which the vehicle travels on the route and/or (ii) a tractive setting of a propulsion system of the vehicle to propel the vehicle at the speed. The controller may select, as the movement characteristic, a reduced speed at which the vehicle travels on the route during the charge operation, relative to prior movement of the vehicle on the route during a prior charge operation, to increase the amount of electrical energy stored in the energy storage device during the charge operation relative to the prior charge operation.

The controller may select a weight of a payload to be carried by the vehicle on the planned trip based on the performance target. Responsive to the vehicle failing to meet the performance target during a prior trip, the controller may select a different weight of the payload for the planned trip relative to the weight of the payload during the prior trip.

The controller may determine the target storage amount based on a difference between (i) a prior amount of electrical energy received by the energy storage device during a prior trip of the vehicle and (ii) a prior amount of electrical energy discharged by the energy storage device during the prior trip. The performance target for the planned trip may be a state of charge of the energy storage device being at least a designated threshold value at a designated point of the planned trip. The performance target for the planned trip may be for the energy storage device to be net state of charge neutral.

The power electronics may receive the electrical energy from the off-board power source during the charge operation while the vehicle is stationary. The controller may control a duration of the charge operation so that the energy storage device receives the target storage amount of electrical energy. The power electronics disposed onboard the vehicle may include a converter configured to modify a value of an electrical parameter of the electrical energy transferred from the off-board power source to the vehicle during the charge operation.

In an example, a method includes determining a target storage amount of electrical energy to store in an energy storage device onboard a vehicle during a charge operation in which the vehicle receives the electrical energy from an off-board power source. The target storage amount may be determined based on a performance target for a planned trip of the vehicle. The method may include distributing the electrical energy received during the charge operation between the energy storage device and one or more loads of the vehicle so that the energy storage device receives the target storage amount of electrical energy.

The method may include selecting a movement characteristic of the vehicle as the vehicle travels along a route in electrical connection with a conductive pathway of the off-board power source during the charge operation. The movement characteristic may be selected so that the energy storage device receives the target storage amount of electrical energy before breaking the electrical connection with the conductive pathway. Selecting the movement characteristic may include selecting (i) a speed at which the vehicle travels on the route and/or (ii) a tractive setting of a propulsion system of the vehicle to propel the vehicle at the speed. Optionally, selecting the movement characteristic may include selecting a reduced speed at which the vehicle travels on the route during the charge operation, relative to prior movement of the vehicle on the route during a prior charge operation, to increase the amount of electrical energy stored in the energy storage device during the charge operation relative to the prior charge operation.

The method may include selecting a weight of a payload to be carried by the vehicle on the planned trip based on at least one of the performance target or a failure to meet the performance target during a prior trip of the vehicle. Determining the target storage amount may include determining a difference between (i) a prior amount of electrical energy received by the energy storage device during a prior trip of the vehicle and (ii) a prior amount of electrical energy discharged by the energy storage device during the prior trip.

The method may include holding the vehicle stationary during the charge operation, and selecting i) a duration of the charge operation, ii) a current level of the charging operation, and/or iii) a voltage level of the charging operation so that the energy storage device receives the target storage amount of electrical energy. The method may include modifying a value of an electrical parameter of the electrical energy received during the charge operation prior to the electrical energy being distributed to the energy storage device and the one or more loads.

In one example, the controllers or systems described herein may have a local data collection system deployed and may use machine learning to enable derivation-based learning outcomes. The controllers may learn from and make decisions on a set of data (including data provided by the various sensors), by making data-driven predictions and adapting according to the set of data. In examples, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In examples, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like. For example, the controller of the control system described herein may use machine learning to enable determining the target storage amount of electrical energy to store in the energy storage device during the charge operation to achieve the performance target and/or to determine the movement and/or timing characteristics of the vehicle to achieve the determine target storage amount of electrical energy.

In one example, the controllers may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one example, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one example, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

As used herein, the terms "processor" and controller may include circuitry, such as a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

If a system, apparatus, assembly, device, etc. (e.g., a controller, control device, control unit, etc.) includes multiple processors, these processors may be located in the same housing or enclosure (e.g., in the same device) or may be distributed among or between two or more housings or enclosures (e.g., in different devices). The multiple processors in the same or different devices may each perform the same functions described herein, or the multiple processors in the same or different devices may share performance of the functions described herein. For example, different processors may perform different sets or groups of the functions described herein.

Use of phrases such as "one or more of ... and," "one or more of ... or," "at least one of ...and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the examples, including the best mode, and to enable a person of ordinary skill in the art to practice the examples, including making and using any devices or systems and performing any incorporated methods. The claims define the patentable scope of the disclosure, and include other examples that occur to those of ordinary skill in the art. Such other examples are within the scope of the claims if they have structural elements that do not differ from the literal language of the claims, or if they include equivalent structural elements with insubstantial differences from the literal language of the claims.

The following clauses describe aspects of the invention:
1. A control system comprising:
   a controller including one or more processors and configured to determine a target storage amount of electrical energy to store in an energy storage device onboard a vehicle during a charge operation in which the vehicle receives the electrical energy from an off-board power source, the target storage amount determined based on a performance target for a planned trip of the vehicle traveling along a route,
   the controller configured to control, via power electronics disposed onboard the vehicle, an allocation of the electrical energy received by the vehicle during the charge operation between the energy storage device and one or more loads of the vehicle according to the target storage amount that is determined.
2. The control system of clause 1 or any other clause, wherein the vehicle includes a collector device disposed onboard the vehicle, the collector device configured to conductively connect to a conductive pathway of the off-board power source extending along a segment of the route, wherein the power electronics are configured to receive the electrical energy from the collector device during the charge operation as the vehicle travels along the segment of the route.
3. The control system of clause 2 or any other clause, wherein the controller is configured to select a movement characteristic of the vehicle as the vehicle travels along the segment of the route during the charge operation to achieve the target storage amount.
4. The control system of clause 3 or any other clause, wherein the controller is configured to select the movement characteristic based on a rate at which the electrical energy is conducted from the conductive pathway to the vehicle.
5. The control system of clause 4 or any other clause, wherein the controller is configured to select the movement characteristic by selecting one or more of (i) a speed at which the vehicle travels along the segment of the route based on a length of the conductive pathway and the rate at which the electrical energy is conducted from the conductive pathway to the vehicle, or (ii) a tractive setting of a propulsion system of the vehicle to propel the vehicle at the speed, such that a sufficient amount of the electrical energy from the off-board power source is directed to the energy storage device during the charge operation to achieve the target storage amount.
6. The control system of clause 3 or any other clause, wherein the controller is configured to select the movement characteristic by reducing a speed at which the vehicle travels along the segment of the route during the charge operation, relative to prior movement of the vehicle along the segment during a prior charge operation, to increase the amount of electrical energy stored in the energy storage device during the charge operation relative to the prior charge operation.
7. The control system of clause 1 or any other clause, wherein the controller is configured to select a weight of a payload to be carried by the vehicle on the planned trip based on the target storage amount that is determined.
8. The control system of clause 7 or any other clause, wherein the controller is configured to select the weight of the payload for the planned trip to be less than a weight of a prior payload carried by the vehicle during a prior trip to reduce a tractive load on the vehicle for the planned trip relative to the prior trip.
9. The control system of clause 1 or any other clause, wherein the controller is configured to determine the target storage amount based on a difference between (i) a prior amount of electrical energy received from the off-board power source and stored in the energy storage device during a prior charge operation associated with a prior trip of the vehicle along the route, and (ii) a prior amount of electrical energy discharged by the energy storage device to power propulsion of the vehicle along the route during the prior trip.
10. The control system of clause 1 or any other clause, wherein the performance target is the energy storage device of the vehicle having a state of charge at completion of the planned trip that is at least a designated threshold value.
11. The control system of clause 10 or any other clause, wherein the designated threshold value is a value between 40% and 75% of a charge capacity of the energy storage device.
12. The control system of clause 1 or any other clause, wherein the performance target is the energy storage device of the vehicle having a final state of charge value at completion of the planned trip that is no less than an initial state of charge value of the energy storage device at a beginning of the planned trip.
13. The control system of clause 1 or any other clause, wherein the vehicle includes a collector device disposed onboard the vehicle and electrically connected to the power electronics of the vehicle, the collector device configured to conductively connect to a conductive structure of the off-board power source, the power electronics are configured to receive the electrical energy via the collector device during the charge operation as the vehicle is stationary on the route.
14. The control system of clause 13 or any other clause, wherein the controller is configured to control a duration of the charge operation, during which the vehicle is stationary on the route, based on a rate at which the electrical energy is conducted from the conductive structure to the collector device, to achieve the target storage amount.
15. The control system of clause 1 or any other clause, wherein the power electronics disposed onboard the vehicle include a DC-DC converter configured to reduce a value of an electrical parameter of the electrical energy conducted from the off-board power source to the vehicle during the charge operation.
16. The control system of clause 15 or any other clause, wherein the electrical parameter of the electrical energy is voltage, and the value of the electrical parameter that is conducted from the off-board power source is at least 1000 V.
17. A method comprising:
   determining a target storage amount of electrical energy to store in an energy storage device onboard a vehicle during a charge operation in which the vehicle receives the electrical energy from an off-board power source, the target storage amount determined based on a performance target for a planned trip of the vehicle traveling along a route; and
   controlling, via power electronics disposed onboard the vehicle, an allocation of the electrical energy received by the vehicle during the charge operation between the energy storage device and one or more loads of the vehicle according to the target storage amount that is determined.
18. The method of clause 17 or any other clause, wherein controlling the allocation comprises distributing the electrical energy to the energy storage device and to a propulsion system of the vehicle to propel movement of the vehicle along the route during the charge operation, the vehicle including a collector device that conductively connects to a conductive pathway of the off-board power source extending along a segment of the route as the vehicle travels along the segment.
19. The method of clause 18 or any other clause, further comprising selecting a movement characteristic of the vehicle as the vehicle travels along the segment of the route during the charge operation, the movement characteristic selected based on a rate at which the electrical energy is conducted from the conductive pathway to the vehicle in order to achieve the target storage amount.
20. The method of clause 19 or any other clause, wherein selecting the movement characteristic comprises selecting one or more of (i) a speed at which the vehicle travels along the segment of the route based on a length of the conductive pathway and the rate at which the electrical energy is conducted from the conductive pathway to the vehicle, or (ii) a tractive setting of a propulsion system of the vehicle to propel the vehicle at the speed, such that a sufficient amount of the electrical energy from the off-board power source is directed to the energy storage device during the charge operation to achieve the target storage amount.
21. The method of clause 19 or any other clause, wherein selecting the movement characteristic comprises reducing a speed at which the vehicle travels along the segment of the route during the charge operation, relative to prior movement of the vehicle along the segment during a prior charge operation, to increase the amount of electrical energy that is stored in the energy storage device during the charge operation relative to the prior charge operation.
22. The method of clause 17 or any other clause, further comprising selecting a weight of a payload to be carried by the vehicle on the planned trip based on the target storage amount that is determined.
23. The method of clause 22 or any other clause, wherein selecting the weight of the payload for the planned trip comprises selecting the weight to be less than a weight of a prior payload carried by the vehicle during a prior trip to reduce a tractive load on the vehicle for the planned trip relative to the prior trip.
24. The method of clause 17 or any other clause, wherein determining the target storage amount comprises determining the target storage amount based on a difference between (i) a prior amount of electrical energy received from the off-board power source and stored in the energy storage device during a prior charge operation associated with a prior trip of the vehicle along the route, and (ii) a prior amount of electrical energy discharged by the energy storage device to power propulsion of the vehicle along the route during the prior trip.
25. The method of clause 17 or any other clause, wherein the performance target is the energy storage device of the vehicle having a state of charge at completion of the planned trip that is at least a designated threshold value.
26. The method of clause 17 or any other clause, wherein the performance target is the energy storage device of the vehicle having a final state of charge value at completion of the planned trip that is no less than an initial state of charge value of the energy storage device at a beginning of the planned trip.
27. The method of clause 17 or any other clause, further comprising controlling the power electronics to receive the electrical energy from the off-board power source via a collector device disposed onboard the vehicle during the charge operation while the vehicle is stationary on the route.
28. The method of clause 27 or any other clause, further comprising controlling a duration of the charge operation, during which the vehicle is stationary on the route, based on a rate at which the electrical energy is conducted from the conductive structure to the collector device, to achieve the target storage amount.
29. The method of clause 17 or any other clause, further comprising reducing a value of an electrical parameter of the electrical energy conducted from the off-board power source to the vehicle during the charge operation via a DC-DC converter disposed onboard the vehicle.
30. The method of clause 17 or any other clause, wherein the planned trip is a haul cycle of an off-highway vehicle that represents the vehicle, and the performance target relates to a state of charge of the energy storage device at an end of the haul cycle.
31. A method comprising:
   determining a target storage amount of electrical energy to store in an energy storage device onboard a vehicle during a charge operation in which the vehicle receives the electrical energy from an off-board power source, the target storage amount being determined based on a performance target for a planned trip of the vehicle; and
   distributing the electrical energy received during the charge operation between the energy storage device and one or more loads of the vehicle so that the energy storage device receives the target storage amount of electrical energy.
32. The method of clause 31, further comprising selecting a movement characteristic of the vehicle as the vehicle travels along a route in electrical connection with a conductive pathway of the off-board power source during the charge operation, the movement characteristic selected so that the energy storage device receives the target storage amount of electrical energy before breaking the electrical connection with the conductive pathway.
33. The method of clause 32, wherein selecting the movement characteristic comprises selecting one or more of (i) a speed at which the vehicle travels on the route or (ii) a tractive setting of a propulsion system of the vehicle to propel the vehicle at the speed.
34. The method of clause 32, wherein selecting the movement characteristic comprises selecting a reduced speed at which the vehicle travels on the route during the charge operation, relative to prior movement of the vehicle on the route during a prior charge operation, to increase the amount of electrical energy stored in the energy storage device during the charge operation relative to the prior charge operation.
35. The method of clause 31, wherein determining the target storage amount comprises determining a difference between (i) a prior amount of electrical energy received by the energy storage device during a prior trip of the vehicle and (ii) a prior amount of electrical energy discharged by the energy storage device during the prior trip.
36. The method of clause 31, further comprising holding the vehicle stationary during the charge operation, and selecting at least one of i) a duration of the charge operation, ii) a current level of the charging operation, and iii) a voltage level of the charging operation so that the energy storage device receives the target storage amount of electrical energy.
37. The method of clause 31, further comprising modifying a value of an electrical parameter of the electrical energy received during the charge operation prior to the electrical energy being distributed to the energy storage device and the one or more loads.

## Claims

1. A control system comprising:
a controller having one or more processors that are configured to determine a target storage amount of electrical energy to store in an energy storage device onboard a vehicle during a charge operation in which the vehicle receives the electrical energy from an off-board power source,
the controller further being configured to determine the target storage amount based at least in part on a performance target for a planned trip of the vehicle,
the controller further being configured to control power electronics onboard the vehicle to distribute the electrical energy received during the charge operation between the energy storage device and one or more loads of the vehicle so that the energy storage device receives the target storage amount of electrical energy.

2. The control system of claim 1, wherein the vehicle includes a collector device configured to electrically connect to a conductive pathway of the off-board power source extending along a route, wherein the power electronics are configured to receive the electrical energy from the collector device during the charge operation as the vehicle travels along the route.

3. The control system of claim 2, wherein the controller is configured to select a movement characteristic of the vehicle as the vehicle travels along the route in electrical connection with the conductive pathway so that the energy storage device receives the target storage amount of electrical energy.

4. The control system of claim 3, wherein the controller is configured to select, as the movement characteristic, one or more of (i) a speed at which the vehicle travels on the route or (ii) a tractive setting of a propulsion system of the vehicle to propel the vehicle at the speed.

5. The control system of claim 3, wherein the controller is configured to select, as the movement characteristic, a reduced speed at which the vehicle travels on the route during the charge operation, relative to prior movement of the vehicle on the route during a prior charge operation, to increase the amount of electrical energy stored in the energy storage device during the charge operation relative to the prior charge operation.

6. The control system of claim 1, wherein the controller is configured to select a weight of a payload to be carried by the vehicle on the planned trip based on the performance target.

7. The control system of claim 6, wherein, responsive to the vehicle failing to meet the performance target during a prior trip, the controller is configured to select a different weight of the payload for the planned trip relative to the weight of the payload during the prior trip.

8. The control system of claim 1, wherein the controller is configured to determine the target storage amount based on a difference between (i) a prior amount of electrical energy received by the energy storage device during a prior trip of the vehicle and (ii) a prior amount of electrical energy discharged by the energy storage device during the prior trip.

9. The control system of claim 1, wherein the performance target for the planned trip is a state of charge of the energy storage device being at least a designated threshold value at a designated point of the planned trip.

10. The control system of claim 1, wherein the performance target for the planned trip is for the energy storage device to be net state of charge neutral.

11. The control system of claim 1, wherein the power electronics are configured to receive the electrical energy from the off-board power source during the charge operation while the vehicle is stationary, and the controller is configured to control a duration of the charge operation so that the energy storage device receives the target storage amount of electrical energy.

12. The control system of claim 1, wherein the power electronics disposed onboard the vehicle include a converter configured to modify a value of an electrical parameter of the electrical energy transferred from the off-board power source to the vehicle during the charge operation.

13. A method comprising:
determining a target storage amount of electrical energy to store in an energy storage device onboard a vehicle during a charge operation in which the vehicle receives the electrical energy from an off-board power source, the target storage amount being determined based on a performance target for a planned trip of the vehicle; and
distributing the electrical energy received during the charge operation between the energy storage device and one or more loads of the vehicle so that the energy storage device receives the target storage amount of electrical energy.

14. The method of claim 13, further comprising selecting a movement characteristic of the vehicle as the vehicle travels along a route in electrical connection with a conductive pathway of the off-board power source during the charge operation, the movement characteristic selected so that the energy storage device receives the target storage amount of electrical energy before breaking the electrical connection with the conductive pathway.

15. The method of claim 13, further comprising selecting a weight of a payload to be carried by the vehicle on the planned trip based on at least one of the performance target or a failure to meet the performance target during a prior trip of the vehicle.
